# EUROPÄISCHE PATENTSCHRIFT

(11) **EP 1 378 689 B1**
(45) Veröffentlichungstag und Bekanntmachung des Hinweises auf die Patenterteilung: **11.10.2006**
(21) Anmeldenummer: 03405411.4
(22) Anmeldetag: 10.06.2003
(51) Int. Cl.: F16J 15/06, F16J 15/08, F01D 11/00, F16J 15/44

(54) **Spaltdichtung zum Abdichten eines Spalts zwischen zwei benachbarten Bauteilen**
Sealing for a gap between two parts
Joint pour l'étanchéité de l'interstice entre deux composants

(30) Priorität: 03.07.2002 RU 2002117875
(43) Veröffentlichungstag der Anmeldung: 07.01.2004
(73) Patentinhaber: Alstom Technology Ltd, 5400 Baden (CH)
(72) Erfinder: Beeck, Alexander, Dr., Orlando, Florida 32828 (US); Fokine, Arkadi, 109444 Moskau (RU); Sloutski, Edouard, 125239 Moskau (RU); Vorontsov, Sergey, 129164 Moskau (RU)

(56) Entgegenhaltungen:
- GB-A- 2 303 888

## Beschreibung

### Technisches Gebiet

Die Erfindung betrifft eine Anordnung zum Abdichten eines Spalts zwischen zwei benachbarten Bauteilen, insbesondere bei Strömungsmaschinen.

### Stand der Technik

Insbesondere bei Strömungsmaschinen können einzelne Bauteile eines Verdichters oder einer Turbine, wie z.B. Leitschaufeln oder Rotorschaufeln oder Hitzeschildelemente, so an einem Gehäuse oder an einem Rotor der Strömungsmaschine montiert und gelagert sein, daß zwischen benachbarten Bauteilen ein Spalt vorliegt, der zur Vermeidung von Leckagen und Druckverlusten in der Strömungsmaschine abgedichtet werden muß. Ein derartiger Spalt erstreckt sich bei einer Strömungsmaschine üblicherweise senkrecht zum Rotor des Verdichters bzw. der Turbine.

Bei der Abdichtung eines derartigen Spalts muß berücksichtigt werden, daß sich die beiden Bauteile, zwischen denen der Spalt ausgebildet ist, im Betrieb der Strömungsmaschine relativ zueinander bewegen können, beispielsweise aufgrund thermischer Ausdehnungseffekte. Durch diese Relativbewegungen verändert sich jedoch die Spaltgeometrie, wodurch sich eine zuverlässige Abdichtung des Spaltes erschwert.
In diesem Zusammenhang offenbart GB 2 303 888 A eine Dichtungsanordnung zum Abdichten eines Spalts zwischen aneinandergrenzenden Komponenten einer Gasturbine, welche thermischen und mechanischen Beanspruchungen und einem gegenseitigen Versatz der benachbarten Komponenten zu widerstehen vermag. Zu diesem Zweck ist jede der Komponenten gegenüberliegend mit einer Nut ausgerüstet und ein gemeinsamer Dichtkörper in die Nuten eingelegt. Der Dichtkörper ist dabei als ein Dichtungsstreifen ausgebildet, auf welchen entlang seinen beiden Längsseiten U-förmige flexible Ausgleichskörper aufgebracht sind, welche der Form der Nuten angepasst sind. Im Falle eines Versatzes der benachbarten Komponenten erleiden die flexiblen Ausgleichskörper eine elastische Verformung, ohne dabei ihre dichtende Anlage an die Wände der gegenüberliegenden Nuten zu verlieren. Allerdings kann sich dabei die flächige Anlage reduzieren, was abrasive Effekte in den beanspruchten Bereichen fördert. Dichtkörper und Ausgleichskörper sind erheblichen mechanischen Beanspruchungen ausgesetzt und erfordern eine anhaltende Elastizität. Dies schränkt die Werkstoffauswahl von vornherein stark ein.

### Darstellung der Erfindung

Hier will die Erfindung Abhilfe schaffen. Die Erfindung, wie sie in den Ansprüchen gekennzeichnet ist, beschäftigt sich mit dem Problem, für eine Anordnung zum Abdichten eines Spalts der eingangs genannten Art eine Ausführungsform anzugeben, die langanhaltend eine zuverlässige Abdichtung des Spalts zwischen sich relativ zueinander bewegenden Bauteilen gewährleisten und dabei den Dichtungskörper nur einer geringfügigen mechanischen Beanspruchung aussetzen.

Erfindungsgemäß wird dieses Problem durch eine Anordnung zum Abdichten eines Spalts mit den Merkmalen des unabhängigen Anspruchs gelöst.
Vorteilhafte Ausführungsformen sind in den abhängigen Ansprüchen wiedergegeben.

Ausgehend von der bekannten Lösung, in dem Spalt zwischen den Bauteilen zwei einander gegenüberliegende Nuten auszubilden und in diese Nuten jeweils einen Ausgleichskörper und einen gemeinsamen Dichtkörper beweglich einzusetzen, beruht die Erfindung darauf, dass jeder Ausgleichskörper eine zum anderen Ausgleichskörper hin offene V-förmige Aufnahmenut aufweist, in die ein gemeinsamer, komplementär geformter Dichtkörper mit rautenförmigem oder rhombusförmigem Querschnitt beweglich eingesetzt ist.
Diese Bauweise führt dazu, daß einerseits Relativbewegungen zwischen den Bauteilen, die eine Veränderung der Spaltweite bewirken, durch Ausgleichsbewegungen des Dichtkörpers in den Aufnahmenuten ausgeglichen werden, indem der Dichtkörper je nach Spaltweite mehr oder weniger tief in die Aufnahmenuten eintaucht. Andererseits können auch solche Relativbewegungen zwischen den Bauteilen ausgeglichen werden, die in der Spaltebene einen Versatz der in den Bauteilen angeordneten Nuten relativ zueinander bewirken, da die Ausgleichskörper in dieser Richtung relativ zu den Bauteilen in den zugehörigen Nuten beweglich gelagert sind. Von besonderer Bedeutung ist außerdem, daß der Dichtkörper in den Aufnahmenuten flächig zur Anlage kommt, wodurch sich eine besonders hohe Dichtwirkung erzielen läßt. Des weiteren werden abrasive Effekte durch den flächigen Kontakt reduziert, wodurch sich die Lebensdauer der erfindungsgemäßen Spaltdichtung erhöht. Es ist klar, daß auch beliebige Kombinationen der beschriebenen Relativbewegungen ausgeglichen werden können.

Vorzugsweise werden der Dichtkörper und die Aufnahmenuten so dimensioniert, daß durch Relativbewegungen der beiden Bauteile auch eine minimale Spaltweite realisierbar ist, bei der die Bauteile aneinander anliegen. Diese Bauweise gewährleistet, daß die Spaltdichtung auch bei extremen Relativbewegungen der Bauteile nicht beschädigt wird und ihre Dichtfunktion gewährleistet ist.

Entsprechend einer vorteilhaften Weiterbildung kann bei den beiden in den Bauteilen ausgebildeten Nuten der Nutgrund eben ausgebildet sein und sich parallel zur Spaltebene erstrecken, wobei jeder Ausgleichskörper einen ebenen Boden aufweist, der flächig am Nutgrund der zugehörigen Nut anliegt. Durch diese Gestaltung wird eine besonders effektive Abdichtung zwischen Ausgleichskörper und dem Bauteil erreicht, in dem die zugehörige Nut ausgebildet ist. Gleichzeitig vermindert die flächige Anlage des Ausgleichkörper-Bodens am Nutgrund abrasive Effekte, die dann auftreten können, wenn sich der Ausgleichskörper entlang des Nutgrundes verstellt.

Bei einer anderen Weiterbildung kann jede Nut einen U-förmigen Querschnitt aufweisen, bei dem einander gegenüberliegende, ebene Innenwände der Nut parallel zueinander und senkrecht zur Spaltebene verlaufen, wobei jeder Ausgleichskörper einen U-förmigen Außenquerschnitt aufweist, bei dem voneinander abgewandte, ebene Außenwände parallel zu den zugehörigen Innenwänden der Nut verlaufen, wobei ein Abstand zwischen den Außenwänden des Ausgleichskörper kleiner ist als ein Abstand zwischen den Innenwänden der Nut. Aufgrund dieser Merkmale wird auf konstruktiv einfache Weise eine relative Verstellbarkeit der Ausgleichskörper in der zugehörigen Nut erreicht. Gleichzeitig gewährleisten die zueinander parallelen Außenwände und Innenwände eine wirksame Anschlagfunktion, die ein Verkanten oder Kippen der Ausgleichskörper in der Nut vermeidet. Des weiteren wird im Bereich des Anschlags die Dichtwirkung durch die flächige Anlage der jeweiligen Außenwand an die zugehörige Innenwand verbessert. Die Parallelität der Wände reduziert außerdem eine Beschädigungsgefahr der Spaltdichtung bei stoßartigen Relativbewegungen, beispielsweise bei einem Druckstoß.

Weitere wichtige Merkmale und Vorteile der erfindungsgemäßen Spaltdichtung ergeben sich aus den Unteransprüchen, aus der Zeichnung und aus der zugehörigen Figurenbeschreibung anhand der Zeichnung.

### Kurze Beschreibung der Zeichnung

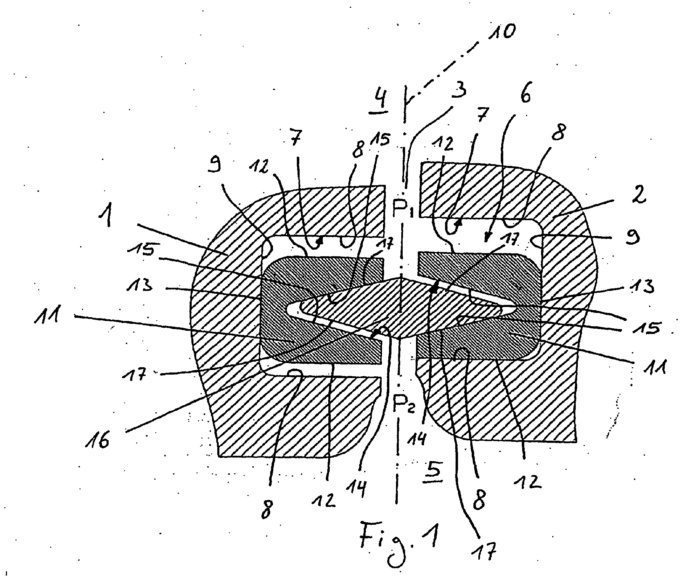

Ein bevorzugtes Ausführungsbeispiel ist in der Zeichnung dargestellt und wird in der nachfolgenden Beschreibung näher erläutert. Die einzige Fig. 1 zeigt eine Schnittansicht einer erfindungsgemäßen Spaltdichtung.

### Weg zur Ausführung der Erfindung

Entsprechend Fig. 1 ist zwischen einem ersten Bauteil 1, das beispielsweise durch eine Leitschaufel einer Turbine gebildet sein kann, und einem zweiten Bauteil 2, das beispielsweise durch ein Hitzeschildelement der Turbine gebildet sein kann, ein Spalt 3 ausgebildet, über den die beiden Bauteile 1 und 2 aneinander angrenzen. Der Spalt 3 erstreckt sich in einer senkrecht zur Zeichnungebene verlaufenden Spaltebene 10, die bei einer Strömungsmaschine senkrecht auf der Rotationsachse eines Rotors einer Turbine oder eines Verdichters stehen kann. Der Spalt 3 kommuniziert gemäß Fig. 1 oben mit einem ersten Raum 4 und entsprechend Fig. 1 unten mit einem zweiten Raum 5, wodurch der Spalt 3 eine kommunizierende Verbindung zwischen diesen beiden Räumen 4 und 5 herstellt. Um einen Gasaustausch zwischen den beiden Räumen 4 und 5 zu vermeiden, muß der Spalt 3 mit Hilfe einer Spaltdichtung 6 abgedichtet werden. Insbesondere bei einer Strömungsmaschine können zwischen den Räumen 4 und 5 außerdem relativ große Druckdifferenzen auftreten; beispielsweise herrscht in dem ersten Raum 4 ein Druck P₁, der erheblich größer ist als ein Druck P₂, der im zweiten Raum 5 vorliegt. Dementsprechend ist die Spaltdichtung 6 gas- und druckdicht ausgebildet.

Jedes der Bauteile 1 und 2 weist eine Nut 7 auf. Diese Nuten 7 sind zum Spalt 3 hin offen und liegen sich im Spalt 3 im wesentlichen gegenüber. In der hier gezeigten bevorzugten Ausführungsform besitzen die Nuten 7 einen U-förmigen Querschnitt und weisen sich gegenüberliegende geradlinige Innenwände 8 sowie einen ebenen Nutgrund 9 auf. Während der Nutgrund 9 jeweils parallel zur Spaltebene 10 verläuft, erstrecken sich die Innenwände 8 parallel zueinander und senkrecht zur Spaltebene 10.

In jeder Nut 7 ist ein Ausgleichskörper 11 untergebracht, der in der hier gezeigten Ausführungsform einen U-förmigen Außenquerschnitt aufweist und zwei voneinander abgewandte, geradlinige Außenwände 12 sowie einen Boden 13 aufweist. Dieser Boden 13 ist jeweils dem Nutgrund 9 der zugehörigen Nut 7 zugewandt und liegt an dieser flächig und dicht an. Die Außenwände 12 verlaufen parallel zueinander und parallel zu den Innenwänden 8 der zugehörigen Nut 7. Die Dimensionierung der Nuten 7 und der darin eingesetzten Ausgleichskörper 11 ist so gewählt, daß ein (senkrechter) Abstand zwischen den Außenwänden 12 des Ausgleichskörpers 11 kleiner ist als ein (senkrechter) Abstand zwischen den Innenwänden 8 der Nut 7. Durch diese Dimensionierung ist jeder Ausgleichskörper 11 in der zugehörigen Nut 7 quer zur Nutlängsrichtung und parallel zur Spaltebene 10 verstellbar gelagert. Bei einer solchen Verstellung gleitet der Boden 13 des Ausgleichskörpers 11 entlang des Nutgrunds 9 der zugehörigen Nut 7.

Jeder Ausgleichskörper 11 ist außerdem an seiner, dem jeweils anderen Ausgleichskörper 11 zugewandten Seite mit einer Aufnahmenut 14 versehen, die einen V-förmigen Querschnitt aufweist. Diese Aufnahmenut 14 besitzt jeweils zwei geradlinige Innenseiten 15, die zueinander geneigt verlaufen und dabei einen, insbesondere spitzen, Winkel einschließen. Auch die Aufnahmenuten 14 sind zum Spalt 3 hin offen.

Die erfindungsgemäße Spaltdichtung 6 weist außerdem einen Dichtkörper 16 auf, der in beide Nuten 7 hineinragt, wobei er außerdem gleichzeitig in beide Aufnahmenuten 17 der Ausgleichskörper 11 eindringt. Der Dichtkörper 16 besitzt einen komplementär zur den Aufnahmenuten 14 der Ausgleichskörper 11 ausgebildeten rhombusförmigen oder rautenförmigen Querschnitt. Dementsprechend weist der Dichtkörper 16 an jedem in eine der Aufnahmenuten 14 hineinragenden Abschnitt zwei geradlinige Außenseiten 17 auf, die um denselben Winkel zueinander geneigt verlaufen, wie die Innenseiten 15 der jeweiligen Aufnahmenut 14. Dementsprechend liegt der Dichtkörper 16 in jedem Ausgleichskörper 11 zumindest mit einer seiner Außenseiten 17 an der zugehörigen Innenseite 15 der Aufnahmenut 14 flächig und dicht an.

Der Begriff "geradlinig" bedeutet im vorliegenden Zusammenhang, daß die jeweiligen Wände 8, 12 und Seiten 15, 17 zumindest im gezeigten Querschnitt gerade sind; die Erstreckung in Nutlängsrichtung kann dann beliebig, insbesondere geradlinig oder gekrümmt, sein.

Die erfindungsgemäße Spaltdichtung 6 funktioniert wie folgt:

Sofern im ersten Raum 4 ein höherer Druck herrscht als im zweiten Raum 5, wenn also gilt P₁ > P₂, dann werden die Ausgleichkörper 11 in Richtung auf den zweiten Raum 5 angetrieben. Hierbei kommt es zu einer Verstellung der beiden Ausgleichskörper 11 in den zugehörigen Nuten 7 bis wenigstens einer der Ausgleichskörper 11, hier der rechts dargestellte Ausgleichskörper 11, mit seiner vorausgehenden Außenwand 12 an der zugewandten Innenwand 8 der zugehörigen Nut 7 großflächig und dicht zur Anlage kommt. Hierdurch wird ein Anschlag für die Verstellbewegung des Ausgleichskörpers 11 gebildet. Da die als Anschlag miteinander zusammenwirkenden Wände 8 und 12 parallel zueinander verlaufen, besteht auch bei schlagartigen Kontaktierungen keine nennenswerte Beschädigungsgefahr für die Spaltdichtung 6. Über die Druckdifferenz wird auch der Dichtkörper 16 in Richtung auf den zweiten Raum 5 angetrieben, wobei er in seinem in Fig. 1 rechts dargestellten Abschnitt mit der vorangehenden Außenseite 17 an der zugewandten Innenseite 15 der Aufnahmenut 14 großflächig und dichtend zur Anlage kommt. In entsprechender Weise kommt dann der andere Ausgleichskörper 11, also in Fig. 1 der links dargestellte Ausgleichskörper 11, mit seiner auf den Dichtkörper 16 zubewegten Innenseite 15 der Aufnahmenut 14 an der zugewandten Außenseite 17 des in die Aufnahmenut 14 hineinragenden Abschnitts des Dichtkörpers 16 großflächig und dichtend zur Anlage.

Darüber hinaus werden die beiden Ausgleichskörper 11 von der Spaltebene 10 weg in die Nuten 7 hineingedrückt, wodurch deren Böden 13 jeweils am Nutgrund 9 der zugehörigen Nut 7 großflächig und dichtend zur Anlage kommen.

Bei der erfindungsgemäßen Spaltdichtung 6 ergeben sich somit flächig wirkende Dichtungen sowohl zwischen den Bauteilen 1 bzw. 2 und den Ausgleichskörpern 11 als auch zwischen dem Dichtkörper 16 und den Ausgleichskörpern 11.

Darüber hinaus nimmt die Dichtungswirkung mit zunehmender Druckdifferenz aufgrund der entsprechend ansteigenden Flächenpressung zu.

Wie aus Fig. 1 besonders deutlich hervorgeht, kann die erfindungsgemäße Spaltdichtung 6 eine Änderung der Relativlage zwischen den Bauteilen 1 und 2, die beispielsweise durch thermische Ausdehnungseffekte verursacht werden kann, ausgleichen, ohne daß sich dadurch die Dichtungswirkung wesentlich verändert. Bei Relativbewegungen, bei denen sich die Spaltweite, also der Abstand zwischen den beiden Bauteilen 1 und 2 verändert, kann der Dichtkörper 16 mit seinen Außenseiten 17, die dichtend an den entsprechenden Innenseiten 15 der Aufnahmenut 17 anliegen, entlang dieser Innenseiten 15 abgleiten, wobei die flächige Kontaktierung und somit die Dichtwirkung stets erhalten bleibt. Die Dimensionierung der Nuten 7, der Ausgleichskörper 11 und des Dichtkörpers 16 ist zweckmäßig so gewählt, daß im gesamten Bereich der möglichen Spaltweiten eine hinreichende Dichtwirkung gewährleistet werden kann. Eine minimale Spaltweite kann sich beispielsweise dann ergeben, wenn die beiden Bauteile 1 und 2 soweit aufeinander zu verstellt werden, daß sie unmittelbar aneinander anliegen (Spaltweite Null).

Bei Relativbewegungen zwischen den Bauteilen 1 und 2, bei denen sich die Bauteile 1 und 2 parallel zur Spaltebene 10 und quer zur Nutlängsrichtung zueinander verstellen, können sich die Ausgleichskörper 11 aufgrund ihrer Lagerung in den Nuten 7 relativ zu den Bauteilen 1 und 2 verschieben, ohne daß dadurch die Dichtungswirkung verloren geht. Zweckmäßig ist dabei die Dimensionierung der Nuten 7 und der Ausgleichskörper 11 sowie die Positionierung der Nuten 7 relativ zueinander auf den maximal zulässigen Verstellbereich der Bauteile 1 und 2 relativ zueinander abgestimmt, um im gesamten Verstellbereich eine hinreichende Dichtungswirkung, ohne Unterbrechungen, gewährleisten zu können.

### Bezugszeichenliste

- 1: erstes Bauteil
- 2: zweites Bauteil
- 3: Spalt
- 4: erster Raum
- 5: zweiter Raum
- 6: Spaltdichtung
- 7: Nut
- 8: Innenwand von 7
- 9: Nutgrund von 7
- 10: Spaltebene
- 11: Ausgleichskörper
- 12: Außenwand von 11
- 13: Boden von 11
- 14: Aufnahmenut
- 15: Innenseite von 14
- 16: Dichtkörper
- 17: Außenseite von 16

## Patentansprüche

1. Anordnung zum Abdichten eines Spalts (3) zwischen zwei benachbarten Bauteilen (1, 2), insbesondere bei Strömungsmaschinen, wobei:
- jedes Bauteil (1, 2) jeweils eine zum Spalt (3) hin offene Nut (7) aufweist,
- die beiden Nuten (7) sich im Spalt (3) im wesentlichen gegenüberliegen,
- ein gemeinsamer Dichtkörper (16) in die beiden Nuten (7) hineinragt,
- in jeder Nut (7) ein Ausgleichskörper (11) quer zur Nutlängsrichtung und parallel zur Spaltebene (10) beweglich gelagert ist,
- jeder Ausgleichskörper (11) dicht am Nutgrund (9) der zugehörigen Nut (7) anliegt,
**dadurch gekennzeichnet, dass**
- jeder Ausgleichskörper (11) eine zum gegenüberliegenden Ausgleichskörper (11) hin offene V-förmige Aufnahmenut (14) aufweist,
- der Dichtkörper (16) einen rhombusförmigen Querschnitt besitzt und in beide Aufnahmenuten (14) der Ausgleichskörper (11) hineinragt,
- die geradlinigen Innenseiten (15) jeder Aufnahmenut (14) mit dem gleichen Winkel zueinander geneigt sind wie die geradlinigen Außenseiten (17) am darin hineinragenden Abschnitt des Dichtkörpers (16), und
- in jeder Aufnahmenut (14) wenigstens eine Außenseite (17) des Dichtkörpers (16) flächig und dicht an der zugehörigen Innenseite (15) der Aufnahmenut (14) anliegt.

2. Anordnung zum Abdichten eines Spalts nach Anspruch 1,
**dadurch gekennzeichnet,**
**daß** die Bauteile (1, 2) relativ zueinander beweglich sind, derart, daß sich die Spaltweite verändern kann, wobei der Dichtkörper (16) und die Aufnahmenuten (17) so dimensioniert sind, daß eine minimale Spaltweite, bei der die Bauteile (1, 2) aneinander anliegen, realisierbar ist.

3. Anordnung zum Abdichten eines Spalts nach Anspruch 1 oder 2,
**dadurch gekennzeichnet,**
**daß** der Nutgrund (9) bei beiden Nuten (7) eben ausgebildet ist und sich parallel zur Spaltebene (10) erstreckt, wobei jeder Ausgleichskörper (11) einen ebenen Boden (13) aufweist, der flächig am Nutgrund (9) der zugehörigen Nut (7) anliegt.

4. Anordnung zum Abdichten eines Spalts nach einem der Ansprüche 1 bis 3,
**dadurch gekennzeichnet,**
**daß** jede Nut (7) einen U-förmigen Querschnitt aufweist, bei dem einander gegenüberliegende, geradlinige Innenwände (8) der Nut (7) parallel zueinander und senkrecht zur Spaltebene (10) verlaufen, und daß jeder Ausgleichskörper (11) einen U-förmigen Außenquerschnitt aufweist, bei dem voneinander abgewandte, geradlinige Außenwände (12) parallel zu den zugehörigen Innenwänden (8) der Nut (7) verlaufen, wobei ein Abstand zwischen den Außenwänden (12) des Ausgleichskörpers (11) kleiner ist als ein Abstand zwischen den Innenwänden (8) der Nut (7).

5. Anordnung zum Abdichten eines Spalts nach einem der Ansprüche 1 bis 4,
**dadurch gekennzeichnet,**
**daß** zumindest eines der Bauteile (1, 2) eine Leitschaufel oder eine Rotorschaufel oder ein Hitzeschildelement einer Turbine oder eines Verdichters ist.

## Claims

1. Arrangement for the sealing of a gap (3) between two adjacent components (1,2), especially in turbo-engines, whereby:
- each component (1,2) has a slot (7) open towards the gap (3),
- the two slots (7) lie generally opposite one another in the gap (3),
- a common sealing component (16) projects into the two slots (7),
- a compensating component (11) is supported in each slot (7) and movable transversely to the longitudinal direction of the slot and parallel to the gap plane (10)
- each compensating component (11) lies with a sealing effect on the slot base (9) of the associated slot (7),
**characterized in that**,
- each compensating component (11) has a V-shaped holding slot (14) open towards the oppositely disposed compensating component (11),
- the sealing component (16) has a rhomboidal cross section and projects into the two holding slots (14) of the compensating components (11),
- the rectilineal inner sides (15) of each holding slot (14) are inclined in relation to one another by the same angle as the rectilineal outer sides (17) on the section of the sealing component (16) projecting therein, and
- in each holding slot (14) at least one outer side (17) of the sealing component (16) lies flat and with a sealing effect on the associated inner side (15) of the holding slot (14).

2. Arrangement for the sealing of a gap according to Claim 1,
**characterized in that**,
the components (1,2) are movable in relation to one another in such a way that the gap width can change, whereby the sealing component (16) and the holding slots (17) are dimensioned so that a minimum gap width, with which the components bear one upon the other, is realizable.

3. Arrangement for the sealing of a gap according to Claim 1 or 2,
**characterized in that**,
the slot base (9) in both slots (7) is formed flat and extends parallel to the gap plane (10), whereby each compensating component (11) has a flat bottom (13) which lies flat on the slot base (9) of the associated slot (7).

4. Arrangement for the sealing of a gap according to one of the Claims 1 to 3,
**characterized in that**,
each slot (7) has a U-shaped cross section, whereby oppositely disposed, rectilineal inner walls (8) of the slot (7) extend parallel to one another and perpendicularly to the gap plane (10), and each compensating component (11) has a U-shaped outer cross section, whereby rectilineal outer walls (12) facing away from one another extend parallel to the associated inner walls (8) of the slot (7), whereby a spacing between the outer walls (12) of the compensating component (11) is smaller than a spacing between the inner walls (8) of the slot (7).

5. Arrangement for the sealing of a gap according to one of the Claims 1 to 4,
**characterized in that**,
at least one of the components (1,2) is a guide vane or a rotor blade or a heat shield element of a turbine or of a compressor.

## Revendications

1. Dispositif pour étanchéifier un interstice (3) entre deux composants voisins (1,2), notamment dans des turbomachines, moyennant quoi:
- chaque composant (1,2) présente respectivement une rainure (7) ouverte allant vers l'interstice (3),
- les deux rainures (7) se font essentiellement face dans l'interstice (3),
- un corps d'étanchéité (16) commun saille à l'intérieur des deux rainures (7),
- dans chaque rainure (7), un corps de compensation (11) est positionné de manière mobile transversalement par rapport au sens de la longueur de la rainure et parallèlement au plan de l'interstice (10),
- chaque corps de compensation (11) repose de manière étanche au fond de rainure (9) de la rainure (7) afférente,
**caractérisé en ce que**
- chaque corps de compensation (11) présente une rainure de réception (14) en forme de V ouverte et allant vers le corps de compensation (11) lui faisant face,
- le corps d'étanchéité (16) possède une section transversale en forme de losange et saille à l'intérieur des deux rainures de réception (14) des corps de compensation (11),
- les côtés internes (15) rectilignes de chaque rainure de réception (14) sont inclinés l'un par rapport à l'autre au même angle que les côtés externes (17) rectilignes sur la portion du corps d'étanchéité (16) qui saille à l'intérieur de celle-ci, et
- dans chaque rainure de réception (14), au moins un côté externe (17) du corps d'étanchéité (16) repose à plat et de manière étanche sur le côté interne (15) correspondant de la rainure de réception (14).

2. Dispositif pour étanchéifier un interstice selon la revendication 1,
**caractérisé en ce que**
les composants (1, 2) sont mobiles l'un relativement à l'autre, de telle sorte que la largeur de l'interstice puisse varier, moyennant quoi le corps d'étanchéité (16) et les rainures de réception (17) sont dimensionnés de telle sorte qu'une largeur d'interstice minimale, à laquelle les composants (1,2) reposent l'un sur l'autre, puisse être réalisée.

3. Dispositif pour étanchéifier un interstice selon la revendication 1,
**caractérisé en ce que**
le fond de rainure (9) des deux rainures (7) est configuré de manière plate et s'étend parallèlement au plan de l'interstice (10), moyennant quoi chaque corps de compensation (11) présente une base (13) plate, qui repose à plat sur le fond de rainure (9) de la rainure afférente (7).

4. Dispositif pour étanchéifier un interstice selon une des revendications 1 à 3,
**caractérisé en ce que**
chaque rainure (7) présente une section transversale en forme de U, à laquelle les parois internes (8) rectilignes, se faisant face de la rainure (7) s'étendent parallèlement l'une à l'autre et perpendiculairement au plan de l'interstice (10), et **en ce que** chaque corps de compensation (11) présente une section transversale externe en forme de U, à laquelle les parois externes (12) rectilignes, se détournant l'une de l'autre, s'étendent parallèlement aux parois internes (8) correspondantes de la rainure (7), moyennant quoi un espace entre les parois externes (12) du corps de compensation (11) est plus petit qu'un espace entre les parois internes (8) de la rainure (7).

5. Dispositif pour étanchéifier un interstice selon une des revendications 1 à 4,
**caractérisé en ce que**
au moins un des composants (1, 2) est une aube directrice ou une aube de rotor ou un élément de bouclier thermique d'une turbine ou d'un compresseur.
